(19) Europäisches Patentamt European Patent Office Office européen des brevets

(11) **EP 4 347 955 B1**

(12) **EUROPEAN PATENT SPECIFICATION**

(45) Date of publication and mention
of the grant of the patent:
**02.07.2025   Bulletin 2025/27**

(21) Application number: **22727353.9**

(22) Date of filing: **12.04.2022**

(51) International Patent Classification (IPC):
**E02F 9/26** *(2006.01)*      **F15B 19/00** *(2006.01)*
**A01G 23/02** *(2006.01)*

(52) Cooperative Patent Classification (CPC):
**E02F 9/264; A01G 23/00; E02F 9/267;**
F15B 19/005; F15B 2211/7051; F15B 2211/765;
F15B 2211/857; F15B 2211/864

(86) International application number:
**PCT/FI2022/050240**

(87) International publication number:
**WO 2022/254082 (08.12.2022 Gazette 2022/49)**

(54) **ARRANGEMENT AND METHOD FOR MONITORING CUMULATIVE MOVEMENT OF A PISTON ROD IN AN ACTUATOR**

ANORDNUNG UND VERFAHREN ZUR ÜBERWACHUNG EINER KUMULATIVEN BEWEGUNG EINER KOLBENSTANGE IN EINEM AKTUATOR

AGENCEMENT ET PROCEDÉ DE SURVEILLANCE DE MOUVEMENT CUMULATIF D'UNE TIGE DE PISTON DANS UN ACTIONNEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2021   FI 20215636**

(43) Date of publication of application:
**10.04.2024   Bulletin 2024/15**

(73) Proprietor: **Ponsse Oyj**
**74200 Vieremä (FI)**

(72) Inventor: **TUOVINEN, Jorma**
**74200 Vieremä (FI)**

(74) Representative: **Kolster Oy Ab**
**Salmisaarenaukio 1**
**P.O. Box 204**
**00181 Helsinki (FI)**

(56) References cited:
**WO-A1-2016/092150      US-A1- 2002 193 924
US-A1- 2018 110 190**

## Description

## Background of the invention

The present invention relates to an arrangement according to the preamble of claim 1 for monitoring the movement of a piston rod in a pressure medium operated actuator.

The present invention also relates to a method according to the preamble of claim 10 by means of which this movement of a piston rod in a pressure medium operated actuator can be monitored.

The invention particularly relates to preventive maintenance of actuators utilised in moving work machines, that is, the maintenance of devices before any faults are observed. For this reason, it is preferable to perform monitoring of the operations of the devices, by means of which, maintenance tasks can possibly be periodised such that the devices will not break down during usage.

Previously are known e.g. arrangements wherein the travel of actuators controlling a crane is calculated by utilising data received from angle sensors in the crane. An arrangement applicable to this is disclosed in e.g. specification WO2016/092150. There are also some known arrangements wherein each hydraulic actuator is provided with a sensor measuring its movement. Data collected from these measuring results can help to evaluate the need for maintenance of the actuators. An example of such an arrangement is disclosed in specification US 2002/0077734. US 2018/110190 A1 discloses an arrangement with the features of the preamble of claim 1.

On one hand, prior-art measuring arrangements are poorly applicable to a moving work machine, on the other hand, many arrangements prerequisite sensors in the actuator itself but are difficult to integrate.

## Brief description of the invention

It is therefore an object of the invention to achieve an arrangement and a method implementing such an arrangement so that the aforementioned problems can be mainly solved.

This object is achieved such that the arrangement for monitoring the cumulative movement of the piston rod in the pressure medium operated actuator is, in accordance with the present invention, provided with the characteristic features defined in the claims. In more detail, the arrangement according to the invention is mainly characterised by what is disclosed in the characterising part of claim 1. The method of the invention is, in turn, mainly characterised by what is stated in the characterising part of claim 10.

Preferred embodiments of the invention are disclosed in the dependent claims.

The object of the invention is to achieve an arrangement and a method, by means of which, it is possible to simply monitor and evaluate the condition of a pressure medium operated actuator in a work machine. Greatest problems of such an actuator relate mostly to the tightness of the actuator. Particularly the moving parts of the actuator, i.e. its piston and piston rod, wear out seals abutting on them. Because such wear is quite directly comparable with the cumulative movement of these moving parts, it is most important to determine this cumulative movement. By means of the present invention, the monitoring is easy to automatise and, if needed, also easy to calibrate in order to correct possible default values related to wear.

The invention also helps to better understand the life cycle of each actuator, whereby it is easier to direct preventive maintenance measures in the precisely accurate location. In this way, it is possible to avoid both unnecessary interruptions of work caused by a broken actuator and interruptions and costs caused by needless maintenance tasks.

In hydraulic systems, accurately timed maintenance measures also help to avoid the access of dirt from the breaking seal into the other system as well as extra maintenance and interruption of work caused by it.

Other advantages provided by the invention are disclosed in the following more detailed description of specific embodiments of the invention.

## Brief description of the figures

In the following, a preferred embodiment of the invention is explained in more detail with reference to the accompanying drawing, in which

Fig. 1 shows a schematic side view of a boom system of a forestry machine,
Fig. 2 shows an outer boom of the boom system of the forest machine according to the figure rotated for an angle $\alpha$,
Fig. 3 shows a transfer cylinder of the boom system,
Fig. 4 shows a schematic axonometric view of a forestry machine, and
Fig. 5 describes a method as a schematic block diagram.

## Detailed description of a preferred embodiment

The present figures do not show the arrangement for monitoring the cumulative movement of the piston rod in the pressure medium operated actuator in scale but the figures are schematic, illustrating the general structure and operation of the preferred embodiments. The structural parts shown by reference numbers in the attached figures then correspond to the structural parts marked by reference numbers in this specification.

Even though the present invention will next be described by means of an example particularly in connection with a boom system of a forest machine, it is also utilisable as such in other operations utilising actuators and in other types of moving work machines or work machine environments, such as industrial robots, wherein it is essential to ensure the long-term duration of their pressure medium operated actuator.

A preferable embodiment of the arrangement thus comprises a sensor unit 1 which consists of at least one 3-axis accelerometer which can measure acceleration, movement and inclination and which determines a position in relation to a gravitational vector.

Such a simple sensor unit is certainly replaceble by a more advanced and versatile inertial sensor which can be formed e.g. by utilising the so-called Micro Electro Mechanical Systems (MEMS) technology which combines microelectronics and micromechanics. Then, the inertial sensor consists of one or more MEMS-based one-axis accelerometers and/or MEMS-based gyroscopes. Such sensors and more versatile measuring units can alone measure e.g. velocity, acceleration, location, angular velocity, angular acceleration, position, distance travelled, temperature, moisture, and pressure. An advantage of MEMS sensors is that they provide an opportunity to integrate signal processing and wireless communication to the sensor.

Such an inertial sensor can also simultaneously store data on a transit time between two successive terminal locations $P_X$. In this context, a terminal location refers to any point into which an actuator or actuators have controlled a part of machine. Hence, the term 'terminal location' does not prerequisite that the actuators have reached one of their extreme ends in their movement, but the actuator can equally have stopped in any location along its path.

The accelerometer 1 according to the present embodiment is arranged to monitor the movement of the movable machine part. The movement is then preferably controlled by at least one pressure medium operated actuator 2. This type of an accelerometer known as such can monitor each movement of this machine part in a space of time and place and, based on this monitoring, data can be produced, inter alia, on each terminal location $P_X$ of the machine part in relation either to a fixed measurement point of the machine or to another accelerometer in the work machine.

In the present arrangement, at least terminal locations $P_X$ produced by such an accelerometer 1 are received by and stored in storage means 3. Storing can then be temporary or long-term. These stored location data are utilised in at least one processing means 4 which can calculate using the location data a movement distance $L_X$ of a piston rod 5 in one or more pressure medium operated actuators from each two successive pieces of terminal location data produced by the accelerometer.

By communicating the data on each movement distance to a calculation means 6, it is possible to form a cumulative total movement distance $L_{tot}$ performed by one or more piston rods 5. Specific monitoring means 7 in the arrangement utilise this cumulative total movement distance by comparing it with an actuator-specific reference value given to the monitoring means. This reference value is based on experience and it reveals the degree of use after which the actuator must be maintained or replaced in order to avoid e.g. fluid leaks.

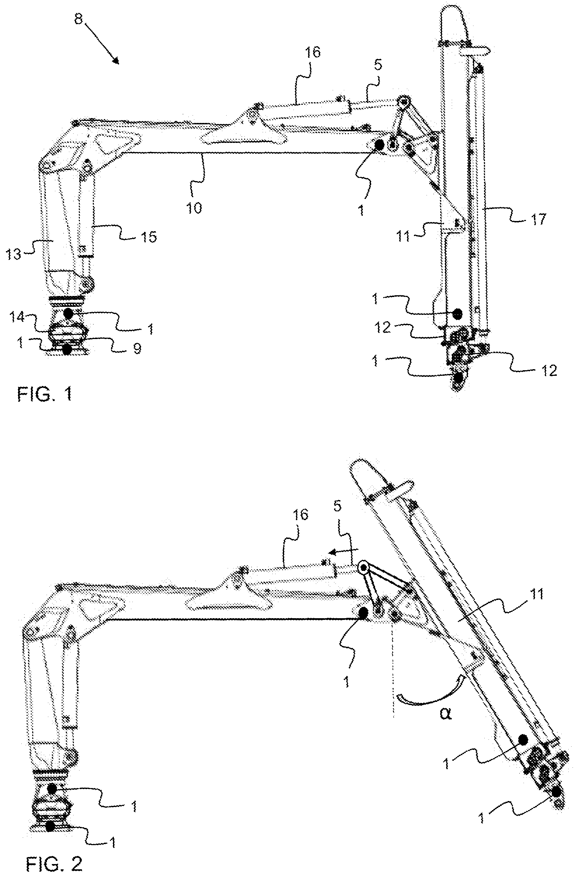

Figs. 1, 2, 3 and 5 show the structure and particularly the operation of the arrangement in more detail. Here, a boom system 8 of the work machine according to Figs. 1 and 2 is provided with accelerometers 1 e.g. in its base 9, its lift boom 10, its outer boom 11, and its outer telescopic extension 12. At least one rotation cylinder 14 is arranged to control the movement of the boom system and to rotate a column 13 included in the boom system and rotatingly attached to the base. When the base is arranged to be tiltable, an accelerometer is also fitted to the body of the work machine. The movement of the lift boom 10 rotatably attached to the column is, in turn, controlled by a lift cylinder 15 and the movement of the outer boom rotatably attached to the lift boom is controlled by a transfer cylinder 16. One or more telescopic extensions extending from the transfer cylinder are controlled by an extension cylinder 17.

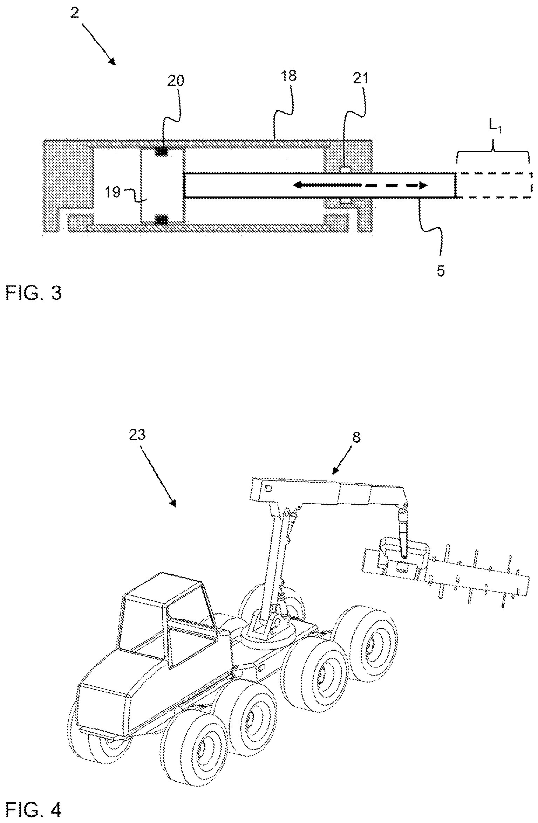

Fig. 3 shows by way of examples a detailed figure of a pressure medium operated actuator 2, and such an embodiment can consist of the rotation, lift, transfer and extension cylinders 14-17 of Figs. 1 and 2. Such a cylinder is made up of a body 18, a piston 19 moving in the body and a piston rod 5 controlled by it. The object of the present arrangement is particularly to prevent problems caused by the wear of a piston seal 20 and a piston rod seal 21 of the cylinder.

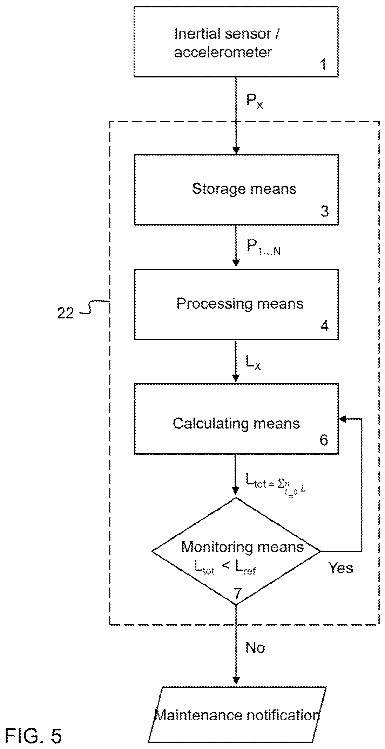

The operations of the arrangement and the method implementing it are illustrated as a block diagram in Fig. 5. The method starts by communicating a control command to move to the boom system in some way known as such. As the result of the control command, the accelerometers 1 are also activated and they start transmitting e.g. their current position data i.e. their terminal location data to the storing means 3 to be stored. For example in the situation of Figs. 1 and 2, a decrease of a projection of the piston rod 5 in the lift cylinder 15 provides the rotation of the outer boom 11 counterclockwise for an angle $\alpha$ in the case of the figure. When the movement stops, the accelerometers again transmit their current position data to the storing means to be stored. By comparing the position data of the accelerometers in the lift boom 10 and the outer boom 11 with each other, on one hand at the start of the rotational movement and on the other hand at the end of the rotational movement, the processing means 4 can form a value of the movement performed by the piston rod. This value determination utilises the known geometry of the boom system, based on which, it is possible to conclude an extent $L_1$ of the movement performed by the piston rod, by which the required rotation was provided.

In this way, by monitoring each individual movement, even ones separated by a momentary stop, performed by the boom system 8, the processing means is able to specify the work performed by each actuator of the boom system and the movements of individual piston rods required by this work.

Data on the movement distance Lx of the piston rod 5 in each actuator 2 is directed to the calculation means 6 which forms these into an actuator-specific cumulative total movement distance $L_{tot}$ performed by the piston rod 5, where

$$L_{tot} = \sum_{i=0}^{n} L_i$$

and where i-n shows the total number of measurements performed.

The actuator-specific cumulative total movement distance $L_{tot}$ achieved in this way is compared with a similarly actuator-specific reference value $L_{ref}$ given to the monitoring means 7 in the arrangement, that is, if

$$L_{tot} < L_{ref}.$$

If the cumulative total movement distance $L_{tot}$ is smaller than the given reference value $L_{ref}$, work can be continued without interruption. If the cumulative total movement distance $L_{tot}$ is equal to or larger than the given reference value $L_{ref}$, the arrangement gives a maintenance notification telling that the actuator 2 in question has reached or is reaching its maintenance interval.

The above-mentioned storage means 3, processing means 4, calculating means 6 and monitoring means 7 can consist of independent device units but they can also be combined into one unified unit forming a monitoring arrangement 22. The means or the operations provided by them can also be combined into a control unit of the work machine.

The present arrangement and method can be preferably utilised in a moving work machine, whereby at least two pieces of sensor units 1 are fitted in two different machine parts.

Equally, the present arrangement and method can be utilised in a forestry machine 23 of Fig. 4, whereby there are sensor units 1 fitted in at least two points of the boom system 8 of the forestry machine.

Those skilled in the art will find it obvious that, as technology advances, the basic idea of the invention can be implemented in many different ways. The invention and its embodiments are thus not restricted to the examples described above but may vary within the scope of the claims.

## Claims

1. Arrangement for the monitoring movement of a piston rod (5) in an actuator (2),

    comprising

    at least one 3-axis sensor unit (1) determining a position in relation to a gravitational vector for monitoring a movement of a machine part controlled by the pressure medium operated actuator (2) in a space of time and place and for producing at least terminal location data ($P_X$) of each movement of this machine part,

    storage means (3) for receiving and storing at least the terminal location data produced by the sensor unit, and

    processing means (4) for calculating a movement distance ($L_X$) performed by the piston rod (5) in the actuator (2) from each two successive pieces of terminal location data ($P_X$) produced by the sensor unit,

    **characterised in that** the arrangement comprises

    calculating means (6) for receiving data on each movement distance ($L_X$) of the piston rod and for forming a cumulative total movement distance ($L_{tot}$) of these, and

    monitoring means (7) for comparing the cumulative total movement distance with a reference value ($L_{ref}$) entered in the monitoring means in order to monitor the degree of use of the actuator (2).

2. An arrangement according to claim 1, **characterised in that** the storage means (3), the processing means (4), the calculating means (6), and the monitoring means (7) are made up of independent units.

3. An arrangement according to claim 1, **characterised in that** the storage means (3), the processing means (4), the calculating means (6), and the monitoring means (7) form a unified monitoring arrangement (22).

4. An arrangement according to claim 1, **characterised in that** the storage means (3), the processing means (4), the calculating means (6), and the monitoring means (7) or the operations provided by them are combined into a control unit in the work machine.

5. An arrangement according to any one of the preceding claims, **characterised in that** the arrangement is fitted to a moving work machine, whereby there are sensor units (1) fitted to at least two different machine parts.

6. An arrangement according to claim 5, **characterised in that** the arrangement is fitted to a forestry machine (23), whereby sensor units (1) are fitted at least in two points in a boom system (8) in the forestry machine.

7. An arrangement according to any one of the preceding claims, **characterised in that** the sensor unit (1) comprises an inertial sensor.

8. An arrangement according to claim 7, **characterised in that** the inertial sensor is formed utilising the MEMS technology such that it comprises one or more MEMS-based one-axis accelerometers and/or MEMS-based gyroscopes.

9. An arrangement according to claim 8, **characterised in that** the inertial sensor is arranged to store data on a transfer time between two successive terminal locations ($P_X$).

10. A method for monitoring the movement of a piston rod (5) in a pressure medium operated actuator (2), the method comprising

fitting to a machine part controlled by the pressure medium operated actuator (2) at least one 3-axis sensor unit (1) determining a position in relation to a gravitational vector for monitoring a movement of the sensor unit in a space of time and place,

forming by the sensor unit at least terminal location data ($P_X$) of each movement of the machine part,

directing the terminal location data ($P_X$) produced by the sensor unit to a storage means (3) where they are received and stored,

calculating by a processing means (4) a movement distance ($L_X$) performed by the piston rod (5) in the actuator (2) from each two successive pieces of terminal location data ($P_X$) being in the storage means and produced by the sensor unit,

directing data on each movement distance ($L_X$) of the piston rod to a calculating means (6), where a cumulative total movement distance ($L_{tot}$) of the piston rod (5) is formed,

comparing the cumulative total movement distance ($L_{tot}$) in a monitoring means (7) with a reference value ($L_{ref}$) given to the monitoring means in order to ensure the operating condition of the actuator (2).

11. A method according to claim 10, **characterised by** utilising an inertial sensor as the sensor unit (1).

12. A method according to claim 11, **characterised in that** the inertial sensor stores data on a transfer time between two successive terminal locations ($P_X$).

**Patentansprüche**

1. Anordnung zum Überwachen einer Bewegung einer Kolbenstange (5) in einem Aktuator (2), die Folgendes umfasst

mindestens eine 3-Achsen-Sensoreinheit (1), die eine Position mit Bezug auf einen Gravitationsvektor bestimmt, zum Überwachen einer Bewegung eines Maschinenteils, das durch den mittels Druckmedium betriebenen Aktuator (2) in einem Raum von Zeit und Ort gesteuert wird, und zum Produzieren von mindestens endgültigen Standortdaten ($P_X$) von jeder Bewegung dieses Maschinenteils,

Speichermittel (3) zum Empfangen und Speichern mindestens der endgültigen Standortdaten, die von der Sensoreinheit produziert werden, und

Verarbeitungsmittel (4) zum Berechnen eines Abstands einer Bewegung ($L_X$), die von der Kolbenstange (5) im Aktuator (2) durchgeführt wird, anhand von jeweils zwei aufeinanderfolgenden endgültigen Standortdatenelementen ($P_X$), die von der Sensoreinheit produziert werden,

**dadurch gekennzeichnet, dass** die Anordnung Folgendes umfasst

Berechnungsmittel (6) zum Empfangen von Daten von jedem Abstand einer Bewegung ($L_X$) der Kolbenstange und zum Bilden eines kumulativen Gesamtbewegungsabstands ($L_{tot}$) von diesen, und

Überwachungsmittel (7) zum Vergleichen des kumulativen Gesamtbewegungsabstands mit einem Referenzwert ($L_{ref}$), der in die Überwachungsmittel eingegeben wird, um den Grad der Verwendung des Aktuators (2) zu überwachen.

2. Anordnung nach Anspruch 1, **dadurch gekennzeichnet, dass** die Speichermittel (3), die Verarbeitungsmittel (4), die Berechnungsmittel (6) und die Überwachungsmittel (7) aus unabhängigen Einheiten bestehen.

3. Anordnung nach Anspruch 1, **dadurch gekennzeichnet, dass** die Speichermittel (3), die Verarbeitungsmittel (4), die Berechnungsmittel (6) und die Überwachungsmittel (7) eine einheitliche Überwachungsanordnung (22) bilden.

4. Anordnung nach Anspruch 1, **dadurch gekennzeichnet, dass** die Speichermittel (3), die Verarbeitungsmittel (4), die Berechnungsmittel (6) und die Überwachungsmittel (7) oder die von diesen bereitgestellten Operationen zu einer Steuereinheit in der Arbeitsmaschine kombiniert sind.

5. Anordnung nach einem der vorhergehenden Ansprüche, **dadurch gekennzeichnet, dass** die Anordnung in eine sich bewegende Arbeitsmaschine montiert ist, wodurch es Sensoreinheiten (1) gibt, die an mindestens zwei verschiedenen Maschinenteilen montiert sind.

6. Anordnung nach Anspruch 5, **dadurch gekennzeichnet, dass** die Anordnung in einer Forstmaschine (23) montiert ist, wodurch Sensoreinheiten (1) an mindestens zwei Stellen in einem Auslegersystem (8) in der Forstmaschine montiert sind.

7. Anordnung nach einem der vorhergehenden Ansprüche, **dadurch gekennzeichnet, dass** die Sensoreinheit (1) einen Inertialsensor umfasst.

8. Anordnung nach Anspruch 7, **dadurch gekennzeichnet, dass** der Inertialsensor unter Nutzung der MEMS-Technologie gebildet ist, derart, dass er einen oder mehrere MEMS-basierte Einachsenbeschleunigungsmesser und/oder MEMS-basierte Gyroskope umfasst.

9. Anordnung nach Anspruch 8, **dadurch gekennzeichnet, dass** der Inertialsensor angeordnet ist, Daten über eine Transferzeit zwischen zwei aufeinanderfolgenden endgültigen Standorten ($P_X$) zu speichern.

10. Verfahren zum Überwachen der Bewegung einer Kolbenstange (5) in einem mittels Druckmedium betriebenen Aktuator (2), wobei das Verfahren Folgendes umfasst

Montieren von mindestens einer 3-Achsen-Sensoreinheit (1), die eine Position mit Bezug auf einen Gravitationsvektor bestimmt, an einem Maschinenteil, das von dem mittels Druckmedium betriebenen Aktuator (2) gesteuert wird, zum Überwachen einer Bewegung der Sensoreinheit in einem Raum von Zeit und Ort,
Bilden von mindestens endgültigen Standortdaten ($P_X$) von jeder Bewegung des Maschinenteil durch die Sensoreinheit,
Leiten der endgültigen Standortdaten ($P_X$), die von der Sensoreinheit produziert werden, zu Speichermitteln (3), wo sie empfangen und gespeichert werden,
Berechnen eines Abstands einer Bewegung ($L_X$), die von der Kolbenstange (5) im Aktuator (2) durchgeführt wird, durch Verarbeitungsmittel (4) anhand von jeweils zwei aufeinanderfolgenden endgültigen Standortdatenelementen ($P_X$), die sich in den Speichermitteln befinden und von der Sensoreinheit produziert werden,
Leiten von Daten von jedem Abstand der Bewegung ($L_X$) der Kolbenstange zu Berechnungsmitteln (6), wo ein kumulativer Gesamtbewegungsabstand ($L_{tot}$) der Kolbenstange (5) gebildet wird,
Vergleichen des kumulativen Gesamtbewegungsabstands ($L_{tot}$) in Überwachungsmitteln (7) mit einem Referenzwert ($L_{ref}$), der den Überwachungsmitteln gegeben wird, um den Betriebszustand des Aktuators (2) sicherzustellen.

11. Verfahren nach Anspruch 10, **gekennzeichnet durch** Nutzen eines Inertialsensors als die Sensoreinheit (1).

12. Verfahren nach Anspruch 11, **dadurch gekennzeichnet, dass** der Inertialsensor Daten über eine Transferzeit zwischen zwei aufeinanderfolgenden endgültigen Standorten ($P_X$) speichert.

**Revendications**

1. Agencement pour surveiller le mouvement d'une tige de piston (5) dans un actionneur (2), comprenant :

au moins une unité de capteur à 3 axes (1) déterminant une position par rapport à un vecteur gravitationnel pour surveiller un mouvement d'une partie de machine commandée par l'actionneur (2) actionné par un milieu de pression dans un espace de temps et de lieu et pour produire au moins des données de position terminale ($P_X$) de chaque mouvement de cette partie de machine,
des moyens de stockage (3) pour recevoir et stocker au moins les données de position terminale produites par l'unité de capteur, et
des moyens de traitement (4) pour calculer une distance de mouvement ($L_X$) réalisée par la tige de piston (5) dans l'actionneur (2) à partir des deux pièces successives de données de position terminale ($P_X$) produites par l'unité de capteur,
**caractérisé en ce que** l'agencement comprend :

des moyens de calcul (6) pour recevoir des données concernant chaque distance de mouvement ($L_X$) de la tige de piston et pour former une distance de mouvement total cumulatif ($L_{tot}$) de ces dernières, et
des moyens de surveillance (7) pour comparer la distance de mouvement total cumulatif avec une valeur de référence ($L_{ref}$) entrée dans les moyens de surveillance afin de surveiller le degré d'utilisation de l'actionneur (2).

2. Agencement selon la revendication 1, **caractérisé en ce que** les moyens de stockage (3), les moyens de traitement (4), les moyens de calcul (6) et les moyens de surveillance (7) sont composés d'unités indépendantes.

**3.** Agencement selon la revendication 1, **caractérisé en ce que** les moyens de stockage (3), les moyens de traitement (4), les moyens de calcul (6) et les moyens de surveillance (7) forment un agencement de surveillance unifié (22).

**4.** Agencement selon la revendication 1, **caractérisé en ce que** les moyens de stockage (3), les moyens de traitement (4), les moyens de calcul (6) et les moyens de surveillance (7) ou les opérations fournies par ces derniers, sont combinés en une unité de commande dans la machine de travail.

**5.** Agencement selon l'une quelconque des revendications précédentes, **caractérisé en ce que** l'agencement est monté sur une machine de travail mobile, moyennant quoi, il y a des unités de capteur (1) montées sur au moins deux parties de machine différentes.

**6.** Agencement selon la revendication 5, **caractérisé en ce que** l'agencement est monté sur une machine forestière (23), moyennant quoi les unités de capteur (1) sont montées au moins dans deux points dans un système de flèche (8) dans la machine forestière.

**7.** Agencement selon l'une quelconque des revendications précédentes, **caractérisé en ce que** l'unité de capteur (1) comprend un capteur inertiel.

**8.** Agencement selon la revendication 7, **caractérisé en ce que** le capteur inertiel est formé en utilisant la technologie MEMS de sorte qu'il comprend un ou plusieurs accéléromètres à un axe basés sur le MEMS et/ou des gyroscopes basés sur le MEMS.

**9.** Agencement selon la revendication 8, **caractérisé en ce que** le capteur inertiel est agencé pour stocker des données concernant un temps de transfert entre deux positions terminales successives ($P_X$).

**10.** Procédé pour surveiller le mouvement d'une tige de piston (5) dans un actionneur (2) actionné par milieu de pression, le procédé comprenant les étapes consistant à :

Monter, sur une partie de machine commandée par l'actionneur (2) actionné par milieu de pression, au moins une unité de capteur à 3 axes (1) déterminant une position par rapport à un vecteur gravitationnel pour surveiller un mouvement de l'unité de capteur dans un espace de temps et de lieu,
former, par l'unité de capteur, au moins des données de position terminale ($P_X$) de chaque mouvement de la partie de machine,
diriger les données de position terminale ($P_X$) produites par l'unité de capteur vers un moyen de stockage (3) dans lequel elles sont reçues et stockées,
calculer, grâce à un moyen de traitement (4), une distance de mouvement ($L_X$) réalisée par la tige de piston (5) dans l'actionneur (2) à partir de deux pièces successives de données de position terminale ($P_X$) qui sont dans le moyen de stockage et produites par l'unité de capteur,
diriger les données concernant chaque distance de mouvement ($L_X$) de la tige de piston vers un moyen de calcul (6), dans lequel une distance de mouvement total cumulatif ($L_{tot}$) de la tige de piston (5) est formée,
comparer la distance de mouvement total cumulatif ($L_{tot}$) dans un moyen de surveillance (7) avec une valeur de référence ($L_{ref}$) donnée au moyen de surveillance afin de garantir la condition de fonctionnement de l'actionneur (2).

**11.** Procédé selon la revendication 10, **caractérisé par** l'utilisation d'un capteur inertiel en tant qu'unité de capteur (1).

**12.** Procédé selon la revendication 11, **caractérisé en ce que** le capteur inertiel stocke des données concernant un temps de transfert entre deux positions terminales ($P_X$) successives.

FIG. 1

FIG. 2

FIG. 3

FIG. 4

```
            ┌──────────────────────────┐
            │   Inertial sensor /      │
            │   accelerometer          │
            │                       1  │
            └──────────────────────────┘
                         │
                         │ P_X
            ┌ ─ ─ ─ ─ ─ ─│─ ─ ─ ─ ─ ─ ─ ─ ┐
            │            ▼                  │
            │  ┌──────────────────────────┐ │
            │  │     Storage means        │ │
            │  │                       3  │ │
            │  └──────────────────────────┘ │
            │            │ P_{1...N}        │
            │            ▼                  │
            │  ┌──────────────────────────┐ │
       22 ─┤  │    Processing means      │ │
            │  │                       4  │ │
            │  └──────────────────────────┘ │
            │            │ L_X              │
            │            ▼                  │
            │  ┌──────────────────────────┐ │
            │  │   Calculating means    ◄─┼─┐
            │  │                       6  │ │ │
            │  └──────────────────────────┘ │ │
            │            │ L_tot = Σ^n_{i=0} L │
            │            ▼                  │ │
            │          ◇◇◇◇◇◇             │ │
            │       Monitoring means        │ │
            │        L_tot < L_ref   Yes ───┘ │
            │              7                │
            └ ─ ─ ─ ─ ─ ─ │ ─ ─ ─ ─ ─ ─ ─ ─┘
                          │ No
                          ▼
              /Maintenance notification/
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016092150 A
- US 20020077734 A
- US 2018110190 A1